Europäisches Patentamt

European Patent Office

Office européen des brevets

(11) Publication number: **0 353 192**
**A1**

## (12) EUROPEAN PATENT APPLICATION

(21) Application number: **89810556.4**

(22) Date of filing: **20.07.89**

(51) Int. Cl.5: **F 23 R 3/00**
**F 02 K 9/62, F 02 K 7/08**

(30) Priority: **25.07.88 CH 2835/88**

(43) Date of publication of application:
**31.01.90 Bulletin 90/05**

(84) Designated Contracting States: **CH DE FR GB LI**

(71) Applicant: **Reiter, Christian**
**Landhausquai 17**
**CH-4502 Solothurn (CH)**

(72) Inventor: **Reiter, Christian**
**Landhausquai 17**
**CH-4502 Solothurn (CH)**

(54) Controllable generation of propulsive gas jet.

(57) Apparatus for generating a propulsive gas jet (18, 118) have an annular combustion chamber (1) with appurtenant gas flow channel (2). Corresponding annular wall segments (4, 5; 26, 27; 40, 126, 128) define the combustion chamber therebetween. At least one of such segments (5, 27, 40, 126) is displaceable relative to another of these wall segments (4, 26, 128) to provide optimum combustion of fuel, next to increased efficiency and minimum emission of contaminants.

*FIG. 3*

EP 0 353 192 A1

**Description**

## CONTROLLABLE GENERATION OF PROPULSIVE GAS JET

### FIELD OF THE INVENTION

The subject invention relates to methods and apparatus for generating controllable propulsive gas jet, as usable, for instance, in gas turbines, jet propulsion apparatus and rockets, to gas turbine control methods and apparatus and, more specifically, to variable circular combustion chambers for gas turbines and other apparatus in which a propulsive gas jet is generated.

### BACKGROUND OF THE INVENTION

A circular combustion chamber is for example described in U.S. Patent 4,368,619, by Jean-Paul Levesque, issued January 18, 1983, for Centrifugal Chambers Gas Turbine. The construction of the combustion chamber with appertaining secondary flow channels disclosed in that patent is relatively complex and results at large power-output variations, as in other turbines, in partially low efficiencies. Also, no control can be exerted on the flow or pressure in the combustion chamber and the appertaining gas flow channel.

By way of general comment, existing gas turbine engines still fail to achieve optimum combustion, maximum efficiency and minimum exhaust emission.

### SUMMARY OF THE INVENTION

It is a general object of the invention to optimize combustion in a gas turbine.

It is also an object of the invention to increase gas turbine efficiency.

It is also an object of the invention to reduce gas turbine exhaust emission.

It is also an object of the invention to produce substantially a uniform hot gas flow over the full cross-section of the gas flow duct at the combustion chamber, whereby the turbine blades installed after the gas flow duct will be fed by hot gas in all areas of the gas flow with equal temperature, speed and pressure.

It is also an object of the invention to serve fractional power output requirements by adapting effective cross-sections to reduced flow volumina, so as to realize an optimum operation of the combustion chamber, an increased efficiency and a decrease in contaminant particle emission of the hot gas flowing out of the turbine.

It is a further object of the invention to provide apparatus for generating a propulsive jet of gas.

Other objects will become apparent in the further course of this disclosure.

The invention resides in apparatus for generating a propulsive jet of gas, having an annular combustion chamber with appurtenant gas flow channel, and is characterized in that at least one wall segment of several corresponding annular wall segments defining the combustion chamber therebetween is displaceable relative to another of the wall segments.

The invention resides also in a method of controlling generation of a propulsive jet of gas, comprising in combination the steps of providing corresponding annular wall segments defining an annular combustion chamber therebetween, and rendering at least one of such segments displaceable relative to another of these wall segments.

### BRIEF DESCRIPTION OF THE DRAWINGS

The subject invention and its various aspects and objects will become more readily apparent from the following detailed description of preferred embodiments thereof, illustrated by way of example in the accompanying drawings, in which like reference numerals designate like or equivalent parts or components, and in which:

Fig. 1 is a longitudinal quarter section of the annular combustion chamber and gas flow duct section of a gas turbine, jet engine or jet propulsion rocket according to an embodiment of the invention;

Fig. 2 is a view similar to Fig. 1 showing a modification according to a further embodiment of the invention;

Fig. 3 is a view similar to Fig. 2 showing a further modification according to another embodiment of the invention; and

Fig. 4 is a side view, with the upper quarter in section, of a jet propulsion apparatus according to an embodiment of the invention.

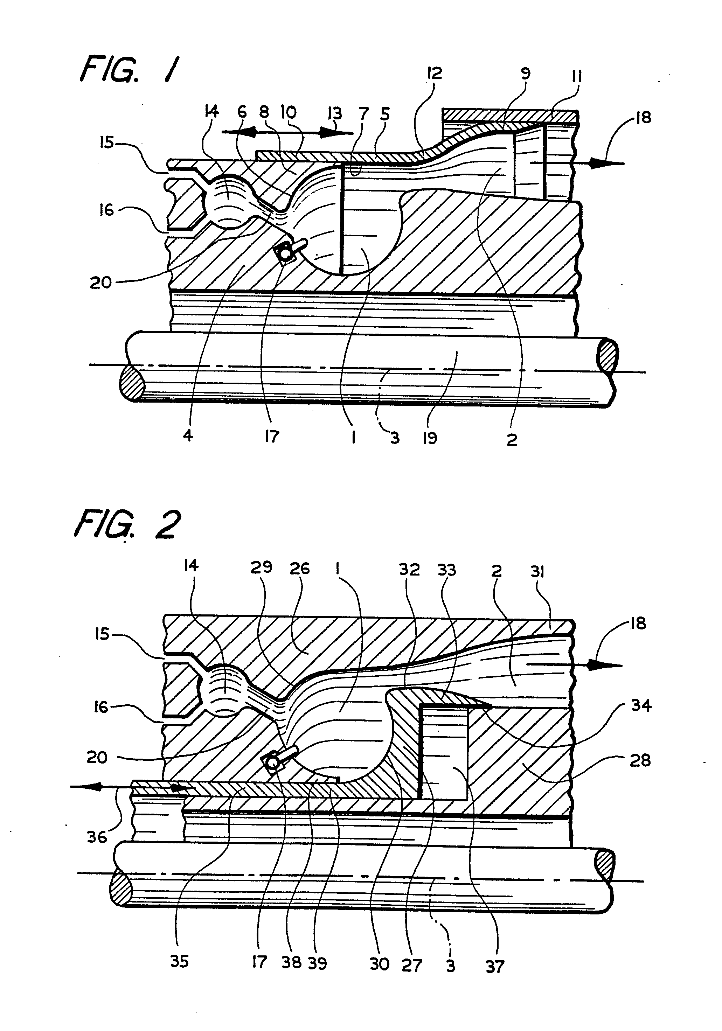

In Figs. 1, 2 and 3, the lower half of the section, which may be a mirror image of the shown upper half, is not shown below the axis 3.

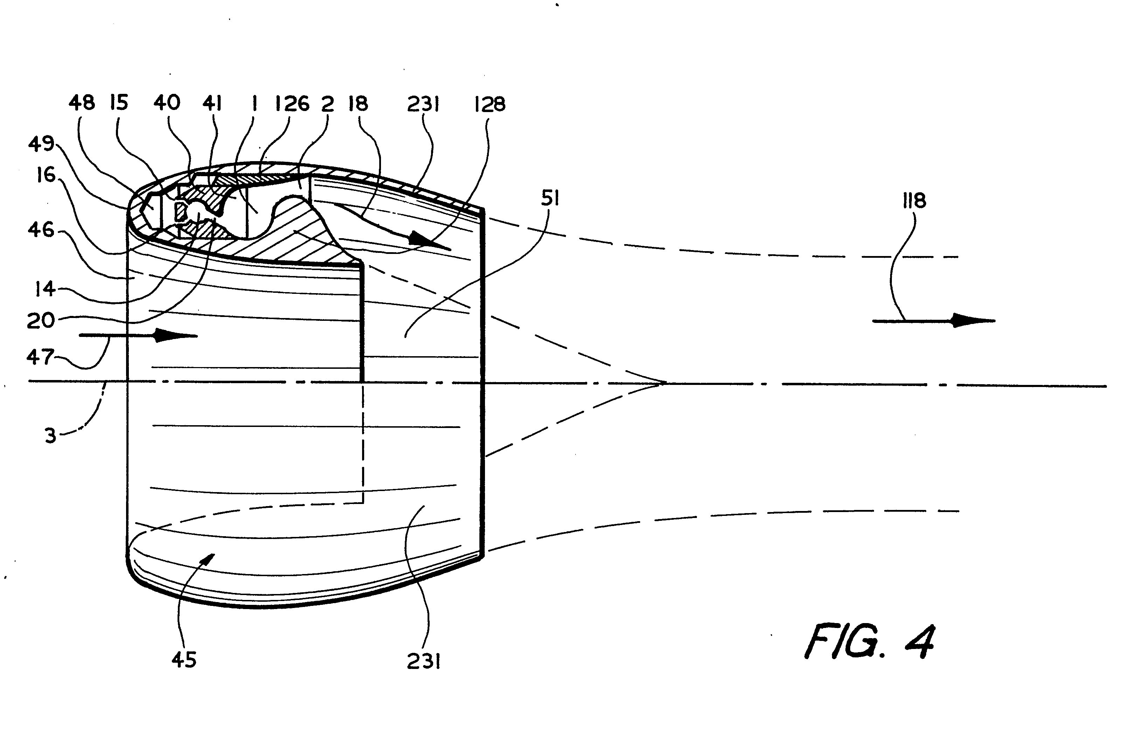

In Fig. 4, only the upper half above the axis 3 is shown in section, while the lower half is shown in side view.

### DESCRIPTION OF PREFERRED EMBODIMENTS

The diagrammatic showing of a cross-section through the combustion chamber region in the turbine according to Fig. 1 is a section along a radial plane of the turbine extending along its longitudinal axis 3.

The compressor stage and the corresponding flow ducts preceding the combustion chamber 1, as well as the work-turbine following the gas flow duct 2 and optional secondary air supply passages, may be conventional and are not shown.

The combustion chamber 1 is annular or circular around the axis 3 of the turbine, whereby this axis 3 is simultaneously the rotational axis of the circular volume of the combustion chamber 1. Attached to the combustion chamber 1 is the also circular gas flow duct 2, in which the hot gas stream flows in the direction of arrow 18. Several mixing chambers 14 are arranged ahead of the combustion chamber 1 and are connected to the combustion chamber 1 through connection channels 20. Air is fed to the mixing chambers 14 through air inlet 15 and fuel through fuel line 16. Several ignition devices 17 are built in around the circular combustion chamber 1 as needed for starting the combustion process in the combustion chamber 1. Various fuels in either liquid or gas form can be used in this process. In the center of the turbine is the turbine shaft 19, shown only schematically in Fig. 1, but representing the working turbine with rotating blades.

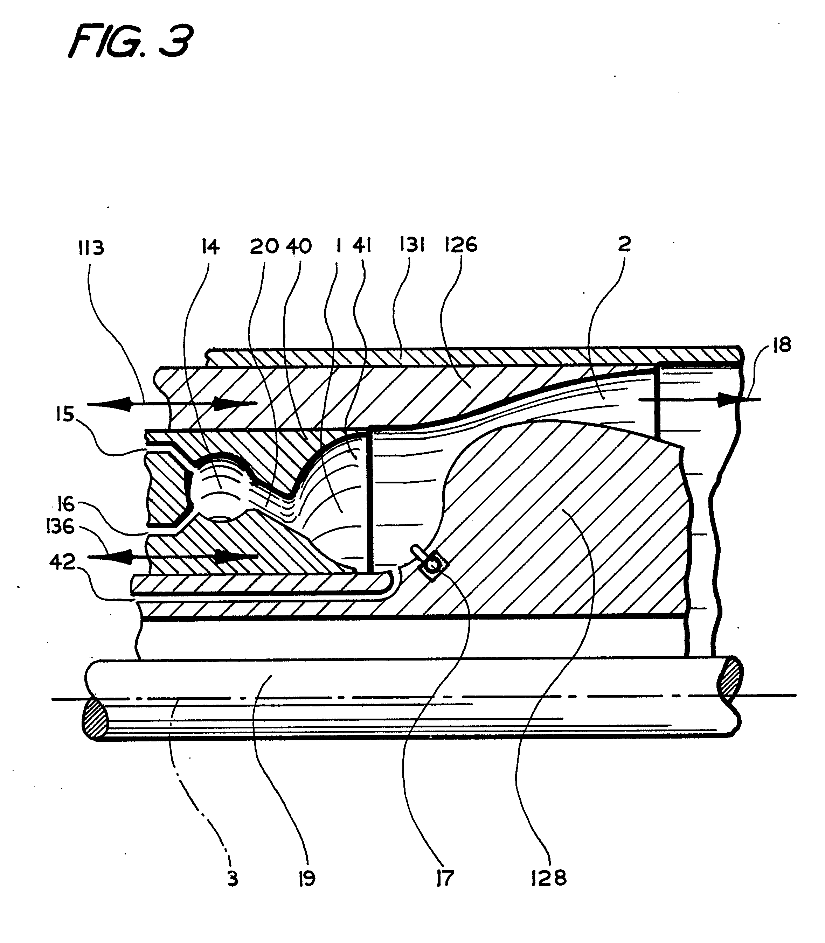

In the illustrated embodiments of the invention, the combustion chamber 1 is delimited by circular segments shown at 4 and 5 in Fig. 1. These segments 4 and 5, the segments 26, 27 and 28 in Fig. 2, the segments 40, 126, and 128 in Fig. 3, or segments of like function within the scope of the invention, are herein referred to as "annular wall segments," since they define or include portions defining the wall or part of the wall, of the combustion chamber 1.

The inner segment 4 is fixed relative to the turbine housing 9 and delimits with its wall 6 part of the combustion chamber 1. The outer segment 5, which also extends circularly around the axis 3, is movable in parallel to that axis 3 in the direction of double arrows 13. The inner wall 7 of this segment 5 forms a part of the wall of the combustion chamber 1. The variably adjustable segment 5 connects with or forms also a circular outer wall or entrance duct component of the gas flow duct 2. This outer wall portion 12 is therefore movable or displaceable with segment 5 parallel to the axis 3. The seal areas are formed such that the marginal regions 8 and 9 of the two segments 4 and 5 overlap, whereby sealing of the combustion chamber 1 is assured. The marginal regions 9 of the housing and 11 of the outer wall of the gas flow duct overlap each other so as to assure a seal here also. Where the walls are subjected to very high temperature loads, additional sealing may be arranged annularly outside the overlapping regions.

In the embodiment of the invention shown in Fig. 1, the cross-section or volume of the combustion chamber 1 remains constant during movement or displacement of the segment 5 in the direction of the arrow 13. However, the annular cross-section at the narrowest cross-section of the gas flow channel 2 is varied by such displacement of the segment 5. This concerns or affects the annular cross-section perpendicularly to the direction of gas flow. Depending on the direction of the displacement of the segment 5, that cross-section or cross-sectional area is either diminished or enlarged and may be designed that like flow velocities occur at various flow-through volumina. In other words, a constant flow speed may be achieved at different flow-through volumina.

Pressure in the combustion chamber 1 can therefore be controlled or influenced by variation of the annular cross-section of the gas flow channel, while maintaining a constant flow-through volume.

This adjustability of the segment 5 allows therefore a simple control or variation of the parameters of the hot gas flow, and therefore an optimization of the turbine performance.

In the embodiment of the invention diagrammatically shown in Fig. 2, the stationary segment 26 of the combustion chamber is arranged on the outside and the variably adjustable segment 27 on the inside of the turbine housing. The stationary segment 26 constitutes thereby a first section 29 of the wall of the combustion chamber 1, and the variably adjustable segment 27 a second section 30 of that wall. The stationary segment 26 becomes an integral part to the housing 28 and is interconnected with the outside wall 31 of the gas flow channel 2.

The adjustable segment 27 is connected or integral with the initial exit duct part 33 of the inner wall 32 of the gas flow channel 2, whereby the end or the duct part 33 overlaps the cylindrical area 34 of the housing 28. The other end 35 of this circular segment 27 is located between the stationary segment 26 and the inside portion of the housing 28 and is variably adjustable in the direction of double arrows 36.

The marginal region 38 of the stationary segment 26 and the region 39 of the adjustable segment 27 overlap each other to assure sealing of the combustion chamber along this common plane; that is, they form the seal areas.

If the variably adjustable segment 27 is moved or displaced in either direction of the double arrows 36 parallel to axis 3, the volume of the combustion chamber 1 can either be increased or decreased. At the same time the gas flow cross-section at the narrowest portion of the gas flow channel 2 is varied, since the inner wall 32 is displaced simultaneously. The adjustment of the segment 27 is possible in the area of the interspace 37 between segment 27 and housing 28.

Air is again supplied through line 15 and fuel through line 16 to mixing chambers 14 and is there mixed uniformly and optimally. From such mixing chambers 14, the mixture is fed through connection ducts 20 into the circular combustion chamber where it is combusted. Ignition devices 17 are also in this embodiment provided in order to start the combustion process in the combustion chamber 1. The hot gases generated through this combustion process flow in the direction of arrow 18 through the gas flow duct 2 to the turbine blades of the working turbine (now shown). Also not shown are the levers or other means for moving or adjusting the segments 5 and 27, since they can be of a conventional type as used for adjusting or displacing components of a gas turbine or similar machine.

In the embodiment of the invention shown in Fig. 3, the wall segments include an annular third wall segment 40 between an inner wall segment 128 and an outer wall segment 126 of the gas turbine defining the combustion chamber 1. This third wall segment 40 is displaceable relative to at least one of the inner and outer wall segments resembling somewhat the wall segments 4 in Fig. 1 and 26 in Fig. 2, or 5 in Fig. 1. Like the double arrows 13 and 36 in Figs. 1 and 2, the double arrows 113 and 136 in Fig. 3 represent control means for displacing the wall segment adjacent thereto. By way of example, double arrow 113 in conjunction with wall segment 126 represents means for varying a flow-through cross-section of the appurtenant gas flow channel 2. Double arrow 136, in conjunction with wall segment 128 represents means for varying a volume of the annular combustion chamber 1.

Drive means in the manner of a worm gear or other self-locking drive may be employed to prevent the displaceable wall segments 5, 27, 40 and 126 from being moved by pressure buildup or variations in the combustion chamber 1 or gas channel 2. Manual, mechanical, hydraulic, electrical and/or electronic means or controls may be employed for displacing and controling the displacement of the movable wall segments 5, 27, 40 and 126 for achievement of optimum operation and efficiency, at minimized contaminant exhaustion.

In its illustrated form, the wall segments in the embodiment shown in Fig. 3 include four annular wall segments, the outermost 131 of which and the innermost 128 of which are stationary. A third one of these four wall segments (40) is displaceable to vary a volume of the combustion chamber 1, and a fourth one of said wall segments (126) is displaceable to vary a flow-through cross-section of the appurtenant gas flow channel 2.

For applications where less of a flexibility of control is sufficient, the wall portions 126 and 131 may be made in one piece or may otherwise be integral. In that case, the flow-through cross-section of the gas flow channel 2 may always be constant, while the volume of the combustion chamber is varied as shown at 136. In either case, the segment 40 is like an annular piston which defines part of the combustion chamber 1 with its hollow hemispherical top or facing 41 and with slides or is displaced in an annular "cylinder" having walls defined by portions of wall sections 126 and 128.

In principle, air and fuel could be injected directly into the combustion chamber 1. However, according to an embodiment of the invention, provision of air mixing chambers 14 is preferred. In this respect and in general, the expression "air" is intended to be sufficiently broad to stand for oxygen with or without nitrogen or other gas mixture.

On the other hand, additional oxygen may be injected through a tubular passage or channel 42 into the combustion chamber 1. As shown by way of example in Fig. 3, such additional channel 42 may proceed through the stationary wall segment 128.

The jet propulsion engine 45 shown in Fig. 4 is in many respects similar to the part of the gas turbine engine shown in Fig. 3, but it should be understood that it may instead be similar to the engine shown in Fig. 1 or the engine shown in Fig. 2 or may otherwise embody the subject invention.

In particular, the engine 45 shown in Fig. 4 has an outer wall 231 similar to the outer wall 131, except that it is curved as shown in Fig. 4. The stationary inner wall section 128 is also curved in Fig. 1 and is shown integral or in one piece with the outer wall 231, forming an inlet 46 for air 47. The apparatus 45 may thus be a jet engine aboard aircraft, for instance. The apparatus 45 may also be a rocket engine for generating a propulsive jet of gas 18 which by reaction on the part 41 of the annular combustion chamber 1 generates a net force contrary to the direction of the arrow 47 shown in Fig. 4.

Air or oxygen and fuel are again supplied through lines 15 and 16 from typically conventional apparatus (not shown), part of which may be located in the space 48 behind the rim 49 formed by the conjunction of stationary walls 128 and 231. Preferably, several air or oxygen and fuel mixing chambers 14 are again provided for supplying the annular combustion chamber 1 with a homogeneous mixture through channels 20 distributed around the longitudinal axis 3.

The engine 45 also has the above mentioned displaceable third wall segment 40 for controlling or adjusting the volume of the annular combustion chamber at the face 41 thereof. The main function of the outer displaceable annular wall segment 126 is again to vary the cross-section of the gas flow channel 2 at the chamber 1. The arrows 113 and 136 and the control means represented thereby have not been shown in Fig. 4, but may be located in the space 48 inside the inner and outer stationary wall sections 128 and 231. The ignition device 17 also has not been shown in Fig. 4 in order to avoid overcrowding, but may, of course, be present in several instances around the longitudinal engine axis 3.

As before, the combustion chamber wall segment 40 may be stationary, if only a variation of the gas flow channel entry section is required. Conversely, the wall segment 126 may be stationary, if only a variation of the combustion chamber volume is required. Those skilled in the art will, of course, select among these several versions the one that optimizes combustion, next to increasing efficiency and decreasing contaminant exhaust emission.

In the jet engine shown in Fig. 4, the vacuum area of the stream is indicated at 51, while the pressure area of the air and gas stream is indicated by an arrow 118.

The subject extensive disclosure will suggest or render apparent to those skilled in the art various modifications and variations within the spirit and scope of the invention and equivalents thereof.

**Claims**

1. Apparatus for generating a propulsive jet of gas (18, 118), having an annular combustion chamber (1) with appurtenant gas flow channel (2),
characterized in that at least one wall segment (5, 27, 40, 126) of corresponding annular wall segments (4, 5; 26, 27; 40, 126, 128) defining the combustion chamber (1) therebetween is displaceable relative to another of the wall segments (4, 26, 128).

2. Apparatus as in claim 1,
wherein:
said at least one segment (5, 27, 40, 126) is displaceable in parallel to an axis (3) of rotation of the apparatus.

3. Apparatus as in claim 1 or 2, wherein:
said annular combustion chamber (1) has a volume which is constant during displacements of said at least one segment (5, 27, 40, 126) relative to another of the wall segments (4, 26, 128).

4. Apparatus as in claim 1 or 2, wherein:
said at least one segment (27, 40) is shaped to vary the volume of the annular combustion chamber (1) by displacement thereof.

5. Apparatus as in any of the claims 1 to 4, wherein:
said corresponding annular wall segments (4, 5; 26, 27; 126, 128) define also at least part of the appurtenant gas flow channel (2).

6. Apparatus as in any of the claims 1 to 4, wherein:
said at least one segment (27, 126) has a part (33) defining an entrance of the gas flow channel (2).

7. Apparatus as in any of the claims 1 to 5, wherein:
said wall segments include an annular third wall segment (40) between an inner wall segment (128) and an outer wall segment (126) defining the combustion chamber (1); and
said third wall segment is displaceable relative to at least one of the inner and outer wall segments (126, 128).

8. Apparatus as in any of the claims 1 to 5, wherein:
said wall segments include four annular wall segments, the outermost (131) of which and the innermost (128) of which are stationary;
a third one (40) of these wall segments is displaceable to vary the volume of the combustion chamber (1); and
a fourth one (126) of these wall segments is displaceable to vary a flow-through cross-section of the appurtenant gas flow channel (2).

9. Apparatus as in any of the preceding claims, including:
several fuel and air mixing chambers (14) preceding and communicating with the annular combustion chamber (1).

10. Apparatus as in any of the preceding claims in or as a gas turbine, jet or rocket.

FIG. 1

FIG. 2

# FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 160 709 (J. LUCAS LTD.) * page 1, lines 43-70; figure 1 * | 1-3 | F 23 R 3/00 F 02 K 9/62 F 02 K 7/08 |
| A | | 10 | |
| | --- | | |
| Y | US-A-2 837 893 (R. M. SCHIRMER) * column 4, lines 29-47; figure 2 * | 1-3 | |
| A | | 10 | |
| | --- | | |
| Y | US-A-2 655 787 (B. D. BROWN) * column 3, lines 5-17; figure 2 * | 1,2 | |
| A | | 7,10 | |
| | --- | | |
| X | US-A-3 916 621 (C. C. AMENTA) * abstract; column 2, line 54 - column 3, line 7 * | 1,2,4 | |
| A | | 10 | |
| | --- | | |
| A | US-A-4 084 371 (W. E. HOWALD) * abstract * | 9 | |
| | ----- | | |

TECHNICAL FIELDS SEARCHED (Int. Cl.5)

F 02 K
F 23 R

The present search report has been drawn up for all claims

| Place of search | Date of completion of the search | Examiner |
|---|---|---|
| BERLIN | 10-10-1989 | NOVELLI B. |

EPO FORM 1503 03.82 (P0401)